# EUROPEAN PATENT APPLICATION

(11) **EP 2 511 820 A1**
(43) Date of publication of application: **17.10.2012**
(21) Application number: 12163985.0
(22) Date of filing: 12.04.2012
(51) Int. Cl.: G06F 9/445

(54) **Bypassing user mode redirection**

(30) Priority: 12.04.2011 US 201113085082
(71) Applicant: AppSense Limited, Daresbury Warrington Cheshire WA4 4HS (GB)
(72) Inventor: Branton, Paul Keith, Rochdale, Lancashire OL11 5NZ (GB)
(74) Representative: Moy, David

(57) **Abstract**

In one embodiment, a non-transitory processor-readable medium stores code associated with a function module included in a resource library. The code can represent instructions that when executed cause a processor to define, in response to a function hook associated with the function module, a copy of the resource library, the copy of the resource library including an unhooked copy of the function module. The code can further represent instructions that when executed cause the processor to execute the unhooked copy of the function module based on at least one policy from a plurality of policies.

## Description

### Background

Embodiments described herein relate generally to hooked functions, and more particularly to the bypassing of a function hook to access original code included in an unhooked copy of a function.

User-mode hooks can enable the processing of a given function or module to be redirected such that custom instructions (e.g., code) are executed prior to and/or in lieu of the default instructions associated with that function or module. In this manner, enhancements such as customization, monitoring, debugging and/or virtualization can be added to the default functionality of the function or module. For example, a function hook can help provide application virtualization, network monitoring, anti-virus protection and/or debugging tools, each defined by custom instructions that are executed in conjunction with or in place of the original instructions of the hooked function.

This method of enhancing an existing function imposes constraints on other third-party modules also designed to enhance the hooked function through, for example, additional function hooks. Because the hooking process redirects the processing of the function or module to an alternative location in memory where the custom code resides, additional third-party enhancement modules are typically incapable of accessing the original code and/or memory locations associated with the original (unhooked) portion of the now-hooked function. For example, an add-on module that interacts with a function already virtualized through a hooking process is typically unable to access one or more system resources associated with the virtualized function (such as files and registry entries) because the hooked/virtualized function redirects such access requests to its own set of memory locations, distinct from those of the original function.

Thus, a need exists for methods and apparatus that allow a module to bypass a function hooking mechanism and execute and/or otherwise obtain access to original code and/or resources of a hooked function.

### Summary

In one embodiment, a non-transitory processor-readable medium stores code associated with a function module included in a resource library. The code can represent instructions that when executed cause a processor to define, in response to a function hook associated with the function module, a copy of the resource library, the copy of the resource library including an unhooked copy of the function module. The code can further represent instructions that when executed cause the processor to execute the unhooked copy of the function module based on at least one policy from a plurality of policies.

### Brief Description of the Drawings

FIG. 1 is a schematic illustration of a computing device storing a function module and a hooked function bypass module, according to an embodiment.

FIG. 2 is a schematic diagram illustrating an execution sequence of a series of instructions associated with a hook bypass and stored in a memory, according to an embodiment.

FIG. 3 is a flow chart illustrating a method of implementing a hook bypass hook on a function module, according to an embodiment.

FIG. 4 is a flow chart that illustrates a method of executing custom instructions as part of a user-mode hook bypass, according to an embodiment.

### Detailed Description

In some embodiments, a hook bypass module can insert, into a function module, one or more instructions configured to cause a processor to: (1) jump from a first memory location storing an initial instruction of the function module; (2) execute one or more custom instructions defined by the hook bypass module; and (3) jump back to a second memory location storing a subsequent instruction of the function module to complete execution of the function module.

The hook bypass module can be stored, for example, in a memory coupled to a processor of a computing device. The memory can be, for example, a Random Access Memory (RAM), Read-only Memory (ROM), flash memory, or other memory type. The processor can be a Central Processing Unit (CPU), such as a Reduced Instruction Set Computer (RISC) processor or other processor.

In some embodiments, the custom instructions inserted by the hook bypass module can cause a processor to determine whether one or more bypass policies has been satisfied. For example, the custom instructions can cause a processor to determine whether an instance of the function module invoked by a running program includes a request for user data. Alternatively, the custom instructions can direct a processor to determine whether one or more system settings and/or environment variables is of a predefined value or above or below a predefined threshold. In some embodiments, the custom instructions can instruct a processor to define a copy of the function module when one or more of the bypass policies is satisfied. The copy of the function module can subsequently be used by the processor (i.e., executed) to bypass execution of the original function module (which may potentially have been hooked by another third-party module or application). The copy of the function module can optionally be included in a copy of a resource library, the original resource library including the original function module. The running program can be, for example, a running application, process, daemon, thread, etc.

The custom instructions can further cause a processor to execute at least a portion of the copy of the function module. In this manner, the processor can execute instructions identical to those of the original function module indicated by the running program, thereby preserving functionality of the original function module while bypassing any function hooks implemented thereon. In some embodiments, a final custom instruction inserted by the hook bypass module can be a jump instruction configured to cause a processor to jump back to a location in memory past that of any jump instructions associated with any pre-existing function hooks of the original function module. For example, the jump instruction can cause the processor to jump to a memory location associated with a final instruction of the original function module, or to an alternative memory location associated with a portion of the running application immediately following a reference to or invocation of the original function module.

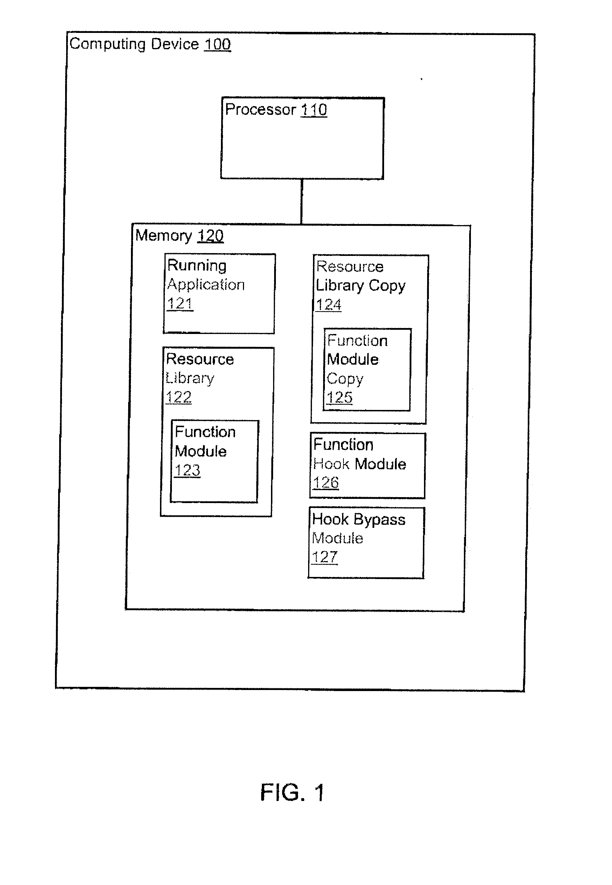

FIG. 1 is a schematic illustration of a computing device storing a function module and a hooked function bypass module, according to an embodiment. More specifically, FIG. 1 is a system block diagram of a computing device 100 that includes a processor 110 and a memory 120. The memory 120 includes code configured to cause a processor, such as the processor 110, to execute a running application 121 that accesses a resource library 122 (both stored at the memory 120). As shown in FIG. 1, the memory 120 further includes a resource library copy 124, a function hook module 126 and a hook bypass module 127. As also shown in FIG. 1, the resource library 122 includes a function module 123 and the resource library copy 124 includes a function module copy 125. As can be implied by their respective names, the resource library copy 124 can be a bit-for-bit copy of the resource library 122, and, accordingly, the function module copy 125 can be a bit-for-bit copy of the function module 123. Said differently, the resource library copy 124 can be an exact copy of the resource library 122 (and thus the function module copy 125 can be an exact copy of the function module 123). In some embodiments, the resource library copy 124 can be stored at a distinct location or address within the memory 120 from that of the resource library 122.

The computing device 100 can be a desktop, server, mainframe or mobile computing device capable of executing an embedded and/or non-embedded operating system. For example, the computing device 100 can be a personal computer, such as a desktop, notebook, netbook, or laptop computer. The computing device 100 can alternatively be a server device, such as a a server device configured exchange data via a local area network (LAN), a wide area network (WAN), an intranet, the Internet, a cellular telephone network, etc. The computing device 100 can alternatively be a portal computing device, such as a personal digital assistant (PDA), a cellular telephone, a smartphone, a tablet computing device, a wearable computing device, etc. In some embodiments, the computing device 100 can be configured to execute an embedded or non-embedded an operating system, such as an operating system including multi-tasking and/or multi-threading functionality.

The processor 110 can be any known type of microprocessor or microcontroller capable of executing instructions stored at the memory 120. For example, the processor 110 can be a microprocessor designed for use within a desktop or laptop computer, a Reduced Instruction Set Computer (RISC) processor, or other known type of processor. Instructions executed by the processor 110 can be, for example, instructions included in, represented by and/or based on the running application 121, the resource library 122, the resource library 124, the function hook module 126 and/or the hook bypass module 127. The instructions can be, for example, compiled high-level programming language code, assembly language code, or other code converted into machine-readable object code (such as binary code comprised of a series of opcodes and one or more operands).

The memory 120 can be of a known physical memory type, such as Random Access Memory (RAM), Read-only Memory (ROM), flash memory, a hard disk drive, etc. As shown in FIG. 1, the memory 120 stores code configured to cause a processor, such as the processor 110, to execute each of the running application 121, the resource library 122, the resource library 124, the function hook module 126 and/or the hook bypass module 127.

The running application 121 can be any executable hardware-based and/or software-based application or module configured to provide functionality to a user of the computing device 100. For example, the running application 121 can be a productivity application, such as a word-processing application, a spreadsheet application, etc. Alternatively, the running application 121 can be another type of application, such as a networking application, a web client, a gaming application, etc.

The resource library 122 can be any hardware-based and/or software-based library including one or more functions, subroutines, submodules, etc. For example, the resource library 122 can be a function or method library, such as a Dynamic Link Library (DLL), an Executable and Linking Format (ELF) library, or other similar library file or package of files. As shown in FIG. 1, the resource library 122 can include a function module 123. In some embodiments, the resource library 122 can be referenced, invoked and/or otherwise accessed by the running application 121. The running application 121 can access the resource library 122 via, for example, a runtime include process configured to pre-load the contents of the resource library 122 (e.g., the function module 123) for subsequent access during the execution of the running application 121. In some embodiments, the resource library 122 can be loaded into the running application 121 based on one or more modifications to an import descriptor table or other resource table associated with the running application 121.

As described above, the resource library copy 124 can include the function module copy 125, and can be a bit-for-bit copy of the resource library 122 including a bit-for-bit copy of the function module 123. As such, the resource library copy 124 can include one or more functions or modules, each including the same instructions as its counterpart included in the resource library 122. As such, each function or module included in the resource library copy 124 can access the same memory locations during execution as those of its counterpart from the resource library 122.

In some embodiments, the resource library copy 124 can be defined by the hook bypass module 127 upon a determination by the hook bypass module 127 that one or more predefined policies has been satisfied. One or more of these predefined policies can optionally be associated with the running application 121 and/or the function hook module 126. In such embodiments, the hook bypass module 127 can, based on the determination, reference, invoke, call or otherwise access the resource library copy 124 (and thus, optionally, the function module copy 125) in lieu of the resource library 122 and (and thus, optionally, the function module 123).

The function hook module 126 can be any hardware-based and/or software-based module configured to define, insert, implement and/or execute a function hook associated with the function module 123. More specifically, the function hook module 126 can be configured to insert an instruction, such as a jump instruction, into a first specified location in the memory 120 (e.g., a memory address associated with a first instruction of the function module 123). The jump instruction can be configured to direct the processor 110 to, upon execution of this instruction, "jump" (i.e., relocate its instruction pointer) to a second specified location in the memory 120 (i.e., a different memory address). In this manner, the function hook module 126 can (1) cause the running application 121 to include custom instructions and/or code defined by the function hook module 126 and (2) cause the processor 110 to execute the custom instructions and/or code before and/or in lieu of all or a portion of the instructions of the function module 123.

In some embodiments, the function hook module 126 can further instruct the processor 110 to, after execution of the custom instructions and/or code, "jump back" to a third specified memory location associated with a specified instruction of the function module 123. Said differently, the function hook module 126 can insert one or more instructions into an appropriate memory location such that, upon completion of the custom instructions and/or code associated with the function hook, the processor 110 returns to a predetermined point within the function module 123. In this manner, the function hook module 126 can cause the processor 110 to define and execute a "hook" of or on the function module 123. In some embodiments, the function hook module 126 can be, can include, or can be included in an application or process (such as a third-party application) configured to alter the functionality and/or execution of at least a portion of the running application 121 (such as the referenced/invoked function module 123 included in the resource library 122). For example, the function hook module 126 can be included in a virtualization application configured to define and execute a virtualized instance of the running application 121. To do so, the function hook module 126 can hook one or more functions included in and/or invoked by the running application 121, thereby executing custom code and reading from/writing to one or more custom memory locations associated with the virtualization application.

The hook bypass module 127 can be any hardware-based and/or software-based module configured to define, insert and/or execute a specialized function hook associated with a function module (e.g., the function module 123). The specialized function hook can be similar in structure and implementation to the function hook described in connection with the function hook module 126 above, but can instead include custom instructions and/or code configured to bypass or "sidestep" any pre-existing function hooks already implemented on a function module (e.g., the function hook implemented on the function module 123 by the function hook module 126 as described above). Said differently, the hook bypass module 127 can implement a "second-order" hook on a function module, the second-order hook configured to divert execution of the function module away from any pre-existing hooks by redirecting the processor to custom code including at least a portion of a copy of the function module.

More specifically, the hook bypass module 127 can cause the running application 121 to execute custom instructions and/or code by inserting a jump instruction into or before a first line of the function module 123. When executed as part of an instance of the function module 123, the jump instruction can cause the processor 110 to jump to a specified memory location and continue execution of instructions from that location. Then, at the memory location indicated by the jump instruction, the hook bypass module 127 can insert one or more custom instructions. The custom instructions can, when executed by the processor 110, provide desired functionality of the function module 123 by invoking the function module copy 125 of the resource library copy 124. The custom instructions can also include a jump command configured to cause the processor 110 to jump back to a predetermined memory location to complete execution of the original instance of the function module 123.

In this manner, the hook bypass module 127 can cause the processor 110 to "jump" from the beginning of the function module 123 to execute analogous instructions from the function module copy 125 before the processor 110 encounters any other function hooks associated with or implemented on the function module 123. By so doing, the hook bypass module 127 can ensure that the desired instructions are executed and that all memory accesses (i.e., reads and/or writes), are performed at their original (i.e., non-hooked/pre-virtualization) locations, as opposed to those indicated by any previously-implemented hooks of the function module 123.

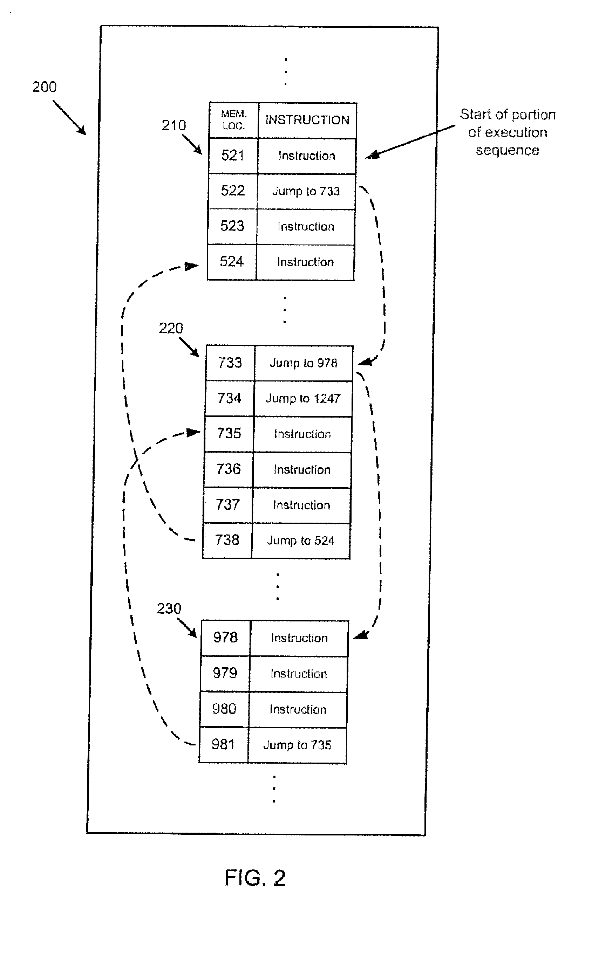

FIG. 2 is a schematic diagram illustrating an execution sequence of a series of instructions associated with a hook bypass and stored in a memory, according to an embodiment. In FIG. 2, a memory 200 stores a plurality of instructions comprising an application module, a portion of which are illustrated as application instruction block 210. The memory 200 also stores a plurality of instructions comprising a function invoked or referenced by the application module, a portion of which are illustrated as function instruction block 220. The memory 200 further stores a plurality of instructions comprising a hook bypass module, a portion of which are illustrated as hook bypass instruction block 230. As shown in FIG. 2, each instruction from the application instruction block 210, the function instruction block 220 and the hook bypass instruction block 230 is associated with a memory location (i.e., a memory address) at which that instruction is stored or located. Although not shown in FIG. 2, by referencing a given memory location from one of the above instruction blocks, a processor (e.g., the processor 110 discussed in connection with FIG. 1 above) can execute that instruction, and then proceed to the numerically subsequent memory location unless otherwise directed or interrupted.

The memory 200 can be any computer or device memory configured to store instructions associated with and/or comprising one or more modules or applications. For example, the memory 200 can be a RAM, ROM, flash memory, Solid State Drive (SSD), or other memory type capable of storing data, such as one or more processor instructions formatted as machine language or object code. Although not shown in FIG. 2, in some embodiments, the memory 200 can be included in a physical device, such as a computing device (e.g., the computing device 100 discussed in connection with FIG. 1). As such, the memory 200 can interact with a processor to allow execution of one or more applications or modules (e.g., the application module described above). In some embodiments, the memory 200 optionally includes a function hook module (not shown in FIG. 2) configured to define and/or insert a first function hook on, to, or associated with the function module described above. In FIG. 2, one or more instructions associated with such a function hook module can be stored beginning at a memory location 1247 (as illustrated by a jump instruction stored at a memory location 734 within the function instruction block 220).

The application instruction block 210 can include instructions associated with and/or comprising a portion of the application module. In some embodiments, the application module can be or include an executable application configured to provide functionality to a user of a computing device in which the memory 200 is located or to which the memory 200 is operatively coupled (not shown in FIG. 2). For example, the application module can be a productivity application, such as a word-processing application, a spreadsheet application, etc. Alternatively, the application module can be another type of application, such as a networking application, a web client, a gaming application, etc. As shown in FIG. 2, the application instruction block 210 can be comprised of multiple instructions, such as the instructions stored at memory locations 521-524. In some embodiments, each instruction can include one or more operations or directives to be executed by a processor. As shown in FIG. 2, one or more instructions can be, for example, a "jump" instruction configured to direct a processor to execute its next instruction at a memory location indicated by that jump instruction. More specifically, in FIG. 2 the instruction stored at memory location 522 is a jump instruction included in the application instruction block 210 and configured to cause a processor to commence execution of the function instruction block 220 by proceeding to execute the instruction stored at memory location 733.

The function instruction block 220 can include instructions associated with and/or comprising a function module referenced, accessed and/or invoked by the application module. The function module can optionally be included in a resource library (as described in connection with the resource library 122 of FIG. 1 above). As shown in FIG. 2, the function instruction block 220 includes an initial instruction stored at memory location 733. In FIG. 2, this instruction is a jump instruction that directs a processor to next execute an instruction stored at memory location 978. In some embodiments, the instruction stored at memory location 733 can be an instruction inserted at the beginning of the function module (and thus the function instruction block 220) as part of a hook bypass operation, and can be configured to direct a processor to execute the instructions of the hook bypass instruction block 230 before proceeding to execute one or more remaining instructions included in the function instruction block 220.

The hook bypass instruction block 230 can include one or more instructions configured to cause a processor to execute custom code associated with a hook bypass (e.g., s the hook bypass functionality discussed in connection with the hook bypass module 127 of FIG. 1). More specifically, the hook bypass instruction block 230 can include instructions configured to cause a processor to define a copy of at least a portion of the function module (including, for example, the function instruction block 220). In some embodiments, the copy of the function module can be included in a copy of a resource library in which the function module is included, the copy of the resource library being defined based on one or more instructions of the hook bypass instruction block 230. In some embodiments, the hook bypass instruction block 230 can define a copy of a portion of the function module so as to provide similar or identical functionality to that of the original function module. In this manner, the hook bypass instruction block 230 can allow the application module to execute the copy of the function module instead of the original function module, thereby bypassing any existing function hooks associated with or implemented on the original function module.

In some embodiments, the hook bypass instruction block 230 can define and/or execute the copied instructions from the function module based on one or more predefined policies. For example, the hook bypass module can define and/or execute the copied, identical instructions when the function module has been invoked by the application module to access (e.g., store or retrieve) data associated with a user. In the example, the hook bypass instruction block 230 can include instructions configured to determine whether the function module has been invoked to access data associated with a user, and, if so, execute the appropriate instructions from the copy of the function module. Thus, by executing the hook bypass instruction block 230, the processor can store and/or retrieve data at or from one or more original memory locations indicated by the function module-as opposed to any alternative memory locations indicated by custom code associated with one or more existing function hooks implemented on the function module. In the event that none of the one or more predetermined policies is satisfied, one or more instructions included in the hook bypass instruction block 230 can optionally instruct the processor to jump back to a predetermined location in memory, such as a memory location immediately following the memory location from which the processor had previously jumped to commence execution of the hook module bypass instruction block 230 (or, alternatively, another memory location associated with the function module).

As indicated in FIG. 2, a processor can execute the application instruction block 210 included in the application module, starting with the instruction stored at memory location 521. Having executed this instruction, the processor can proceed to execute the instruction stored at memory location 522, which invokes the function module by instructing the processor to jump to memory location 733 (i.e., the first instruction of the function instruction block 220) and execute the instruction stored thereat.

Having proceeded to memory location 733, the processor can execute the instruction stored at this memory location. As shown in FIG. 2, due to an inserted function hook associated with the hook bypass module, this initial instruction associated with the function module is a jump instruction directing the processor to jump to execute an instruction stored at memory location 978 (i.e., a first instruction included in the hook bypass instruction block 230). The processor can next execute one or more custom instructions included in the hook bypass instruction block 230 and then return to continue or complete execution of the function module. As discussed above, these one or more custom instructions can be configured to cause the processor to define and execute a portion of a copy of the function module, thereby mimicking original functionality of the function module while storing data and and/or retrieving data from memory locations indicated by the original function module (as opposed to any memory locations associated with, for example, any function hooks inserted in the function instruction block 220 at a memory location *after* that of the jump instruction stored at memory location 733).

Once it has completed execution of the custom instructions included in the hook bypass instruction block 230, the processor can follow a jump instruction to "return" to the function instruction block 220 at a specified memory location, and continue execution from that point. For example, as shown in FIG. 2, the processor can execute the instructions at memory locations 978-980, and then follow the directive of the jump instruction stored at memory location 981 to return to memory location 735. In this manner, the processor can execute the remaining instructions included in the function instruction block 220, starting at memory location 735 (i.e., the memory location immediately following a memory location (734) containing a jump instruction to another memory location (1247) associated with a previously-inserted function hook). At this point, the processor can continue to execute the function instruction block 220 until completion. Said differently, the processor can execute instructions stored at the memory locations 735-737, and then follow the final jump instruction (stored at memory location 738) to exit the function module and return to memory location 523 (within the application instruction block 210), at which point it can continue normal execution of the instructions of the application module.

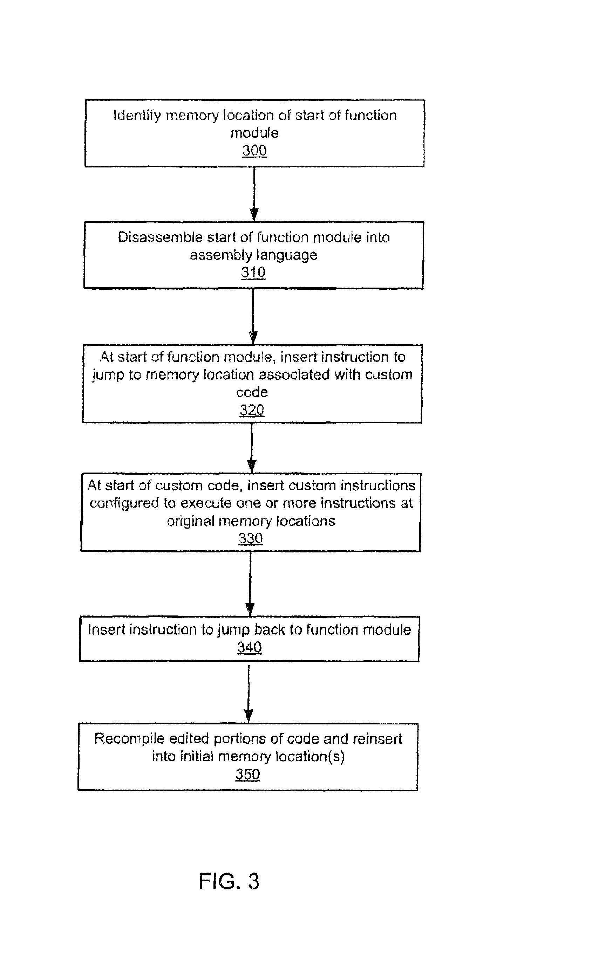

FIG. 3 is a flow chart illustrating a method of implementing a hook bypass hook on a function module, according to an embodiment. More specifically, FIG. 3 illustrates a method of decompiling at least a portion of an executable program, inserting custom instructions configured to implement a hook bypass hook on a function module called by the program and recompiling the decompiled and inserted portions prior to program execution.

A hook insertion module can identify a memory location of a start of a function module, 300. In some embodiments, a hook insertion module can be executed at a device, such as a computing device similar to the computing device 100 of FIG. 1. The hook insertion module can be configured to identify a memory location of a first instruction of an indicated function module (i.e., the function module to which the hook bypass hook is to be inserted). In some embodiments, the hook insertion module can be executed by a processor operatively coupled to a memory in which the hook insertion module and/or the function module is stored, such as the processor 110 and the memory 120 discussed in connection with FIG. 1.

The hook insertion module can disassemble an initial portion of the function module into assembly language, 310. More specifically, the hook insertion module can identify a relevant portion of the function module (e.g., the first instruction of the function module) and convert that portion from machine code (i.e., binary code including opcodes and operands) into assembly language or code. The hook insertion module can optionally then convert the assembly code into high-level programming code.

Having converted the relevant portion of the function module into assembly code, the hook insertion module can insert an assembly jump instruction at the start of the function module, 520. More specifically, the hook insertion module can insert one or more instructions configured to cause a processor, when executing the function module, to "jump" to a specified memory location and being executing instructions at that memory location. In some embodiments, the specified memory location can be a memory location at which custom instructions/code associated with the hook bypass is located.

Next, the hook insertion module can insert the one or more custom instructions at the specified memory location, 330. More specifically, the hook insertion module can store or write, at the specified location in memory, custom instructions configured to implement the hook bypass. For example, the custom instructions can include one or more instructions that direct a processor to determine whether one or more predefined policies or rules has been satisfied. The custom instructions can further include instructions configured to cause the processor to define a copy of the function module (or a copy of a resource library in which the function module is included) when the processor determines that one or more of the predefined policies or rules has been satisfied.

Having inserted the custom code associated with the hook bypass, the hook insertion module can next insert, at the end of the custom code, a jump instruction configured to cause a processor to jump back and continue execution of instructions associated with the function module, 340. In some embodiments, the jump instruction can be configured to cause the processor to continue execution of the function module at a memory location further down the execution sequence than where it exited the function module per the initial jump instruction inserted at step 520 above. In this manner, the processor can "jump over" or "bypass" one or more other jump or other instructions associated with one or more other hooks of the function module, thus ensuring that the custom instructions inserted in step 330 are executed by the processor, to the exclusion of any instructions associated with the one or more other function hooks.

Having inserted all instructions necessary to insert the bypass hook, the hook insertion module can recompile the edited/inserted portions, 350. More specifically, the hook insertion module can recompile the edited/inserted portions of the function module into machine or object code ready for execution by a processor. In some embodiments, the hook insertion module can reinsert the newly-compiled portions into the appropriate locations in memory, so as to not disrupt proper execution of the function module at runtime. Although not shown in FIG. 3, in some embodiments the hook insertion module can include a running process, daemon or other module configured to check, on a periodic basis or at the termination of an application, process, or thread, whether any currently-executing application, process or thread includes a reference to the copy of the resource library (or the copy of the function module included therein). In such embodiments, the hook insertion module can delete the copy of the resource library (and thus the copy of the included function module) upon determining that no such application, process or thread includes a reference to or invocation of the copy of the resource library.

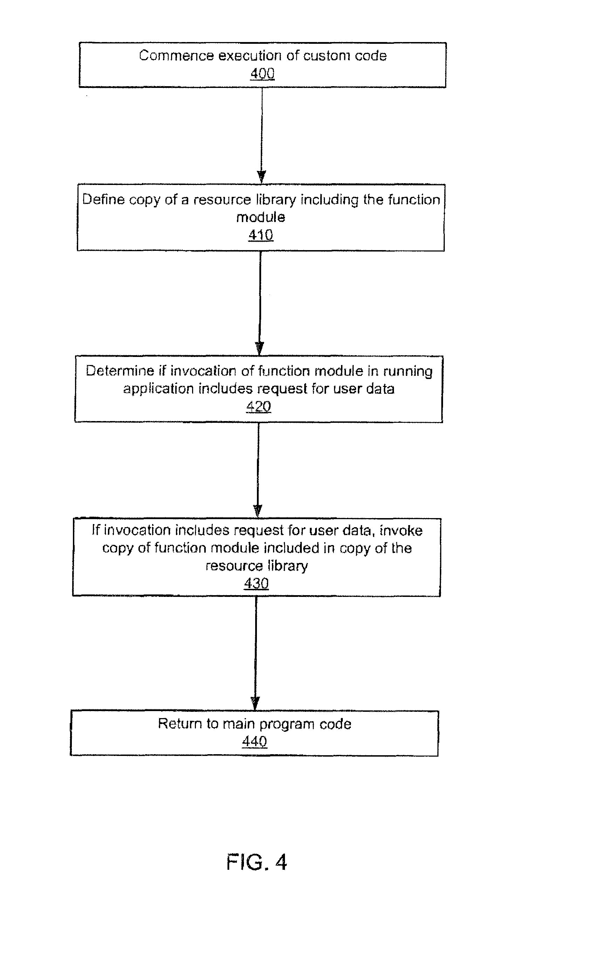

FIG. 4 is a flow chart that illustrates a method of executing custom instructions as part of a user-mode hook bypass, according to an embodiment. More specifically, the flow chart illustrates a number of instructions included in a hook bypass module that can be executed by a processor as part of a user-mode hook bypass operation.

The processor can commence execution of instructions at a specified memory location, 400. The instructions can be, for example, custom code included in a hook bypass module and configured to mimic a portion of a function module being bypassed. In some embodiments, a processor can commence execution of the custom code at the specified memory location in response to a jump instruction inserted as the first instruction of a function module, the jump instruction directing the processor to begin executing instructions at the specified memory location instead of continuing to the next instruction included in the function module.

The processor can next define a copy of a resource library that includes the function module, 410. In some embodiments, the resource library and/or the copy of the resource library can be a DLL or other resource library including one or more function modules, submodules, subroutines, methods, object definitions, etc. In some embodiments, the copy of the resource library can have an identifier different from an identifier of the resource library. For example, the copy of the resource library can have a file name sufficient to identify it as a copy of the resource library, but different from the identifier of the original resource library file. The copy of the resource library can include a copy of the function module. In some embodiments, the copy of the function module can be a bit-for-bit copy of the function module being bypassed. The processor can also optionally define the copy of the resource library based at least in a part on a pointer value indicating a location in memory and/or at a storage device (e.g., a hard drive, a flash memory drive) at which the resource library is currently stored. Rather than as part of a set of custom code instructions associated with a hook bypass operation, in some embodiments, the processor can optionally define the copy of the function in response to a user system and/or network logon, or in response to another user-initiated or system-based event.

In some embodiments, the processor can verify that the copy of the resource library and/or the function module is based on a current and/or up-to-date version of the resource library by, for example, referencing a local or network-based version list or definition associated with the resource library. If the processor determines that the copy of the resource library is not based on a current and/or up-to-date version of the resource library, the processor can request and receive a current version of the resource library, and accordingly define a copy of that current version of the resource library.

The processor can next determine if an invocation of the function module in a running application includes a request for user data, 420. Said differently, the processor can determine whether a reference to or call of the function module requests data associated with a user of the running application and/or an operating system on which the running application resides and/or is currently executing. Alternatively, the processor can determine whether one or more other predefined bypass policies is met. In this manner, the processor can determine whether a bypass operation is necessary to, for example, preserve data integrity in the presence of a virtualization or other hook of the function module (i.e., to ensure that relevant data is read from and/or written to a desired memory location). For example, the processor can determine whether the function module is stored at a specified device, such as a specified remote device associated with a network (e.g., a virtual private network ("VPN")). In another example, the processor can determine whether a bypass is necessary based at least in part on a current value of a default system setting, a user preference setting, one or more system environment variables or parameters, a physical location of a user device, whether a current time falls within a predetermined time period, etc.

The processor can next invoke the copy of the function module included in the copy of the resource library when the invocation of the original function module includes a request for user data, 430. More specifically, based on the determination made in step 420 above, the processor can invoke all or a portion of the copy of the function module when the invocation of the function module within the running application includes a request for user data. For example, the processor can call and execute relevant portions of the copy of the function module associated with the retrieval of, operation on and/or storage of one or more data associated with the user. By executing the relevant portions from the (unhooked) copy of the function module, the processor can retrieve data from and/or store data to one or more memory locations indicated by the copy of the function module, thereby avoiding any memory location redirections inserted into or associated with the original function module as part of one or more existing function hooks implemented thereon.

Having completed execution of the bypass instructions (i.e., custom code associated with the hook bypass operation), the processor can return to an appropriate position within the referring portion of the running application, 440. Said differently, the processor can next execute an instruction stored at a memory location associated with a predetermined point within the flow of the main program code. For example, the processor can follow a jump instruction included in the custom code described above, and accordingly proceed to execute instructions of the main program at a point after the initial invocation of the function module. In this manner, the processor can continue to execute the running application, having bypassed any existing function hooks associated with the function module, and alternatively executing the custom code described above.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices.

Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using Java, C++, or other programming languages (e.g., object-oriented programming languages) and development tools. Additional examples of computer code include, but are not limited to, control signals, encrypted code, and compressed code.

While various embodiments have been described above, it should be understood that they have been presented by way of example only, not limitation, and various changes in form and details may be made. Any portion of the apparatus and/or methods described herein may be combined in any combination, except mutually exclusive combinations. The embodiments described herein can include various combinations and/or sub-combinations of the functions, components and/or features of the different embodiments described. For example, in some embodiments a non-transitory processor-readable medium can store code configured to define a hook bypass operation that causes two or more function modules to include a jump instruction that directs a processor to the same memory location.

## Claims

1. An apparatus, comprising:
a processor;
a memory, the memory storing a function module at a first memory location, the function module being included in a resource library; and
a hook bypass module, the hook bypass module configured to:
define a copy of the function module, an identifier of the copy of the function module being different from an identifier of the function module;
store the copy of the function module at a second memory location; and
access the copy of the function module when the function module includes an instruction to access user data.

2. The apparatus of claim 1, wherein the function module is associated with at least one user-mode hook.

3. The apparatus of claim 1 or claim 2, wherein the hook bypass module is associated with a second function hook, the function module being associated with a first function hook and the second function hook.

4. The apparatus of any preceding claim, wherein the hook bypass module is further configured to define a copy of the resource library.

5. The apparatus of any preceding claim, wherein the resource library is a Dynamic Link Library (DLL).

6. The apparatus of any preceding claim, wherein the function module has been modified based on a modification to an import descriptor table associated with the resource library.

7. A method, comprising:
determining that a function module being accessed by a running application includes an instruction to access a user datum at a first memory location;
determining that the function module is associated with a function hook module, the function hook module including an instruction to access the user datum at a second memory location;
defining a copy of the function module, the copy of the function module including the instruction to access user data at the first memory location; and
executing the copy of the function module.

8. The method of claim 7, further comprising:
defining the copy of the function module in response to a user logon.

9. The method of claim 7 or claim 8, wherein the function module is included in a resource library and the copy of the function module is included in a copy of the resource library.

10. The method of any one of claims 7-9, wherein the copy of the function module is executed based at least in part on a value of at least one of:
whether the function module includes an instruction to access information associated with a user;
whether the function module is stored at a specified device;
a default system setting;
a user preference setting;
one or more system environment parameters;
a physical location of a user device; and
a predetermined time period.

11. The method of any one of claims 7-10, wherein the defining the copy of the function module is in response to the determining that the function module is associated with the function hook module.

12. The method of claim 11, wherein the defining the copy of the function module is configured to be performed before the determining that the function module is associated with the function hook module.

13. The method of any one of claims 7-12, further comprising:
determining, in response to a termination of the running application, whether any currently running application includes an instruction to access the copy of the function module; and
deleting the copy of the function module when no currently running application includes an instruction to access the copy of the function module.
